# EUROPEAN PATENT APPLICATION

(11) **EP 4 788 034 A1**
(43) Date of publication of application: **05.08.2026**
(21) Application number: 23953749.1
(22) Date of filing: 28.09.2023
(51) Int. Cl.: H04W 72/542

(54) **WIRELESS COMMUNICATION METHOD, TERMINAL DEVICE, AND NETWORK DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/122854
(87) International publication number: WO 2025/065605

(57) **Abstract**

A wireless communication method, a terminal device, and a network device are provided. The wireless communication method includes: receiving, by a terminal device, first information transmitted by a network device, where the first information is configured to indicate resource information of radio resources allocated by the network device to the terminal device, the radio resources correspond to a first time period, and the terminal device organizes transmission of service data according to the first information. In this application, the terminal device schedules service data based on the resource information of radio resources allocated by the network device, which helps improve scheduling accuracy and thereby avoids negatively impacting user experience.

## Description

### TECHNICAL FIELD

This application relates to the technical field of wireless communication technologies, and specifically, to a wireless communication method, a terminal device, and a network device.

### BACKGROUND

In a wireless communication system, when a terminal device transmits service data of specific services (such as Extended Reality (XR) services) to a network device, it schedules the transmitted data by discarding partial data to adapt to network conditions. However, scheduling the data by the terminal device may be inaccurate-either excessively discarding data, or insufficiently discarding data-both of which can negatively impact user experience.

### SUMMARY

Embodiments of this application provide a wireless communication method, a terminal device, and a network device. The following describes them in several aspects.

A first aspect provides a wireless communication method, including: receiving, by a terminal device, first information transmitted by a network device, where the first information is configured to indicate resource information of radio resources allocated by the network device to the terminal device, the radio resources correspond to a first time period, and the terminal device organizes transmission of service data based on the first information.

A second aspect provides a wireless communication method, including: transmitting, by a network device, first information to a terminal device, where the first information is configured to indicate resource information of radio resources allocated by the network device to the terminal device, the radio resources correspond to a first time period, and the radio resources are configured to organize service data.

A third aspect provides a terminal device, including: a receiving module, configured to receive first information transmitted by a network device, where the first information is configured to indicate resource information of radio resources allocated by the network device to the terminal device, and the radio resources correspond to a first time period; and an organization module, configured to organize transmission of service data based on the first information.

A fourth aspect provides a network device, including: a transmitting module, configured to transmit first information to a terminal device, where the first information is configured to indicate resource information of radio resources allocated by the network device to the terminal device, the radio resources correspond to a first time period, and the radio resources are configured to organize service data.

A fifth aspect provides a terminal device, including a transceiver, a memory, and a processor, where the memory is configured to store a program, the processor is configured to invoke the program in the memory and control the transceiver to receive or transmit signals, to enable the terminal device to perform the method according to any one of the first aspect.

A sixth aspect provides a network device, including a transceiver, a memory, and a processor, where the memory is configured to store a program, the processor is configured to invoke the program in the memory and control the transceiver to receive or transmit signals, to enable the network device to perform the method according to any one of the second aspect.

A seventh aspect provides a device, including a processor, configured to invoke a program from a memory, to enable the device to perform the method according to any one of the first aspect or the second aspect.

An eighth aspect provides a chip, including a processor, configured to invoke a program from a memory, to enable a device equipped with the chip to perform the method according to any one of the first aspect or the second aspect.

A ninth aspect provides a computer-readable storage medium, storing a program thereon that enables a computer to perform the method according to any one of the first aspect or the second aspect.

A tenth aspect provides a computer program product, including a program that enables a computer to perform the method according to any one of the first aspect or the second aspect.

An eleventh aspect provides a computer program, where the computer program enables a computer to perform the method according to any one of the first aspect or the second aspect.

In this application, the terminal device schedules service data based on the resource information of the radio resources allocated by the network device, which helps improve scheduling accuracy and thus avoids negatively impacting user experience.

### BRIEF DESCRIPTION OF THE DRAWINGS

FIG. 1 is an exemplary diagram of a system architecture of a wireless communication system to which embodiments of this application may be applied.
FIG. 2 is an exemplary diagram of an arrival time window for video frame data of an XR service.
FIG. 3 is a schematic diagram of a structure of video frame data for an XR service.
FIG. 4A is a schematic flowchart of a first mode in which a network device indicates network congestion.
FIG. 4B is a schematic flowchart of a second mode in which a network device indicates network congestion.
FIG. 5 is a schematic flowchart of a wireless communication method provided by an embodiment of this application.
FIG. 6 is an exemplary diagram of a starting moment of a first time period.
FIG. 7A is an exemplary diagram of one implementation of the method shown in FIG. 5.
FIG. 7B is an exemplary diagram of another implementation of the method shown in FIG. 5.
FIG. 8A is an exemplary diagram of a process for determining a PDCP SN according to an embodiment of this application.
FIG. 8B is an exemplary diagram of a process for determining a PDCP SN according to another embodiment of this application.
FIG. 9 is a schematic flowchart of a process in which a terminal device schedules XR service data.
FIG. 10 is a schematic structural diagram of a terminal device provided by an embodiment of this application.
FIG. 11 is a schematic structural diagram of a network device provided by an embodiment of this application.
FIG. 12 is a schematic structural diagram of a device provided by an embodiment of this application.

### DETAILED DESCRIPTION OF THE EMBODIMENTS

The following describes technical solutions in the embodiments of this application clearly and completely with reference to the accompanying drawings in the embodiments of this application. It is evident that the described embodiments are only a part of the embodiments of this application, rather than all of them.

### Communication System Architecture

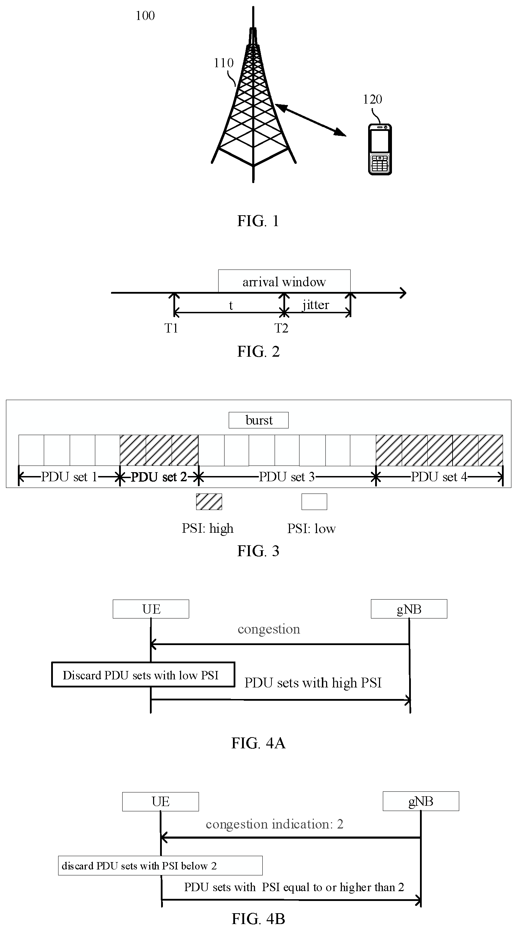

FIG. 1 is an exemplary diagram of a system architecture of a wireless communication system 100 to which the embodiments of this application may be applied. The wireless communication system 100 may include a network device 110 and a terminal device 120. The network device 110 may be a device that communicates with the terminal device 120. The network device 110 may provide communication coverage for a specific geographic area and may communicate with terminal devices 120 located within the coverage area.

FIG. 1 exemplarily shows one network device and one terminal device. Optionally, the wireless communication system 100 may include one or more network devices 110 and/or one or more terminal devices 120. For one network device 110, the one or more terminal devices 120 may all be within the network coverage of the network device 110, or all be outside the network coverage of the network device 110, or partially within and partially outside the network coverage of the network device 110. This is not limited in the embodiments of this application.

Optionally, the wireless communication system 100 may further include other network entities such as a network controller and a mobility management entity, which are not limited in the embodiments of this application.

It should be understood that the technical solutions of the embodiments of this application may be applied to various communication systems, such as fifth-generation (5G) systems or new radio (NR) systems, long-term evolution (LTE) systems, LTE frequency division duplex (FDD) systems, LTE time division duplex (TDD) systems, and the like. The technical solutions provided in this application may also be applied to future communication systems, such as sixth-generation mobile communication systems, satellite communication systems, and others.

The terminal device in the embodiments of this application may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user device. The terminal device in the embodiments of this application may refer to a device that provides voice and/or data connectivity to a user and may be used to connect people, objects, and machines, such as handheld devices or vehicle-mounted devices with wireless connectivity. The terminal device in the embodiments of this application may be a mobile phone, a tablet, a laptop, a palmtop computer, a mobile internet device (MID), a wearable device, a virtual reality (VR) device, an augmented reality (AR) device, a wireless terminal in industrial control, a wireless terminal in autonomous driving, a wireless terminal in remote medical surgery, a wireless terminal in smart grids, a wireless terminal in transportation safety, a wireless terminal in smart cities, a wireless terminal in smart homes, and the like. Optionally, a UE may act as a base station. For example, a UE may serve as a scheduling entity that provides sidelink signals between UEs in vehicle-to-everything (V2X) or device-to-device (D2D) communications. For instance, a cellular phone and a car may communicate with each other using sidelink signals, or a cellular phone and a smart home device may communicate without relaying signals through a base station.

The network device in the embodiments of this application may be a device for communicating with terminal devices and may also be referred to as an access network device or a wireless access network device. For example, the network device may be a base station. The network device in the embodiments of this application may refer to a radio access network (RAN) node (or device) that connects terminal devices to a wireless network. The base station may broadly cover or be replaced by various names, such as NodeB (NB), evolved NodeB (eNB), next-generation NodeB (gNB), relay station, access point, transmitting and receiving point (TRP), transmitting point (TP), master eNB (MeNB), secondary eNB (SeNB), multi-standard radio (MSR) node, home base station, network controller, access node, wireless node, access point (AP), transmission node, transceiver node, baseband unit (BBU), remote radio unit (RRU), active antenna unit (AAU), remote radio head (RRH), central unit (CU), distributed unit (DU), positioning node, and the like. The base station may be a macro base station, a micro base station, a relay node, a donor node, or similar, or a combination thereof. The base station may also refer to a communication module, a modem, or a chip installed in the aforementioned devices or apparatuses. The base station may also be a mobile switching center, a device that performs base station functions in D2D, V2X, or machine-to-machine (M2M) communications, a network-side device in 6G networks, or a device that performs base station functions in future communication systems. The base station may support networks with the same or different access technologies. The embodiments of this application do not limit the specific technology or device form adopted by the network device.

The base station may be fixed or mobile. For example, a helicopter or a drone may be configured to act as a mobile base station, and one or more cells may move according to a location of the mobile base station. In other examples, a helicopter or a drone may be configured to serve as a device communicating with another base station.

In some deployments, the network device in the embodiments of this application may refer to a CU or a DU, or the network device may include both a CU and a DU. A gNB may also include an AAU.

The network device and terminal device may be deployed on land (indoors or outdoors, handheld or vehicle-mounted), on water, or in the air (e.g., on aircraft, balloons, or satellites). The scenarios in which the network device and terminal device are deployed are not limited in the embodiments of this application.

It should be understood that all or part of functions of the communication devices in this application may also be implemented by software running on hardware or by virtualized functions instantiated on a platform (e.g., a cloud platform).

### XR Service and Data Scheduling of XR Service

With the continuous development of wireless cellular communication technologies, particularly the advancement of fifth-generation (5G) communication technology, spectrum efficiency has significantly improved, available frequency bands have broadened, and achievable data rates have increased substantially. As a result, supporting XR services over cellular networks has gradually become feasible.

XR services involve large data volumes and typically employ Protocol Data Unit (PDU) sets as transmission units. A PDU set may contain one or more PDUs, and one or more PDU sets may be used for transmitting XR service data. However, network transmission capacity is limited, and XR services impose stringent latency requirements. Consequently, when the network cannot transmit all PDU sets (e.g., during network congestion), scheduling the transmitted PDU sets is required to discard certain PDU sets to adapt to network conditions. To address this, related technologies have introduced an indicator called PDU Set Importance (PSI) to denote the significance of PDU sets. The PSI level serves as a basis for scheduling the transmitted PDU sets-during network congestion, higher-PSI PDU sets are prioritized for transmission while lower-PSI sets are discarded to reduce data volume which is needed to be transmitted. For downlink data, PSI indications are conveyed via transport layer headers to the User Plane Function (UPF) and subsequently notified to the network device. For uplink data, PSI is indicated by higher layers to an access stratum of the terminal device.

As an example, XR service data can be video frames. In terminal devices, each video frame undergoes sampling, encoding, and packetization at the application layer before being delivered to the access stratum of the terminal device for transmission. Video frame sampling occurs at fixed intervals (e.g., 60 frames per second), that is, one video frame is sampled in every 16.67 ms. However, encoding durations of processes vary per frame, therefore, an arrival time interval of each video frame data at the access stratum of the terminal device are not consistently spaced at 16.67ms. To address this, related technologies define an average encoding duration. As shown in FIG. 2, starting from the sampling time T1, an average time length t of data encoding determines the center position T2 of the video frame arrival window. Taking the central position T2 as a reference, a duration segment is extracted both forward and backward of T2, that is, a jitter interval around T2, which defines the arrival window, within which each frame reaches the access stratum of the terminal device. Terminal devices may notify the network device of the timing of the arrival window for each video frame via UE Assistance Information (UAI).

FIG. 3 illustrates how a video frame data packet forms a burst including four PDU sets, each containing multiple PDUs. Some PDU sets (e.g., PDU set 2 and 4 in FIG. 3) have higher PSI levels, while others (e.g., PDU set 1 and 3) have lower PSI levels. During network congestion, if the terminal devices cann't transmit all the PDU sets, the terminal devices prioritize transmitting PDU sets 2 and 4 and discard PDU sets 1 and 3.

However, the terminal device cannot directly detect network congestion and must rely on indications from the network device. When the network device signals network congestion, the terminal device schedules the transmitted PDU sets according to PSI. In existing techniques, the network device may employ either of two modes to indicate network congestion.

Mode 1 is shown as FIG. 4A, the network device only signals network congestion without specifying severity of congestion. Upon receiving this, the terminal discards low-PSI PDU sets and transmits only high-PSI sets. However, if the terminal receives multi-level PSI data packets from the application layer, inaccurate scheduling of PDU sets by the terminal device may occur-either excessive discarding (degrading user experience and wasting radio resources allocated by the network device) or insufficient discarding. However, constrained by the radio resources allocated by the network device, the terminal device may be forced to discard additional PDU sets with relatively higher PSI levels, consequently degrading user experience.

Mode 2 is shown as FIG. 4B, the network device specifies network congestion severity (e.g., level 2) when specifying network congestion. Upon receiving the indication, the terminal device discards PDU sets with PSI below 2 and transmits only PDU sets with PSI greater than or equal to 2. In this mode, scheduling of PDU sets by the terminal device better aligns with radio resources allocated by the network. However, an execution of this mode by the network device is contingent upon knowledge of both the PSI levels of uplink XR service data on the terminal side and the corresponding data volume for each PSI level, therefore, this mode requires the terminal device to report the above information-increasing uplink transmission overhead of the terminal device. Moreover, the access stratum of the terminal device cannot predict per-PSI data volumes of PDU sets corresponding to next video frame beforehand; reporting the above information is only possible after application-layer packet generation. However, given the stringent latency requirements of XR services, if the network device determines congestion indications only after the terminal device reports the above information, the process may exceed the transmission delay budget (TDB) allocated for XR service.

Consequently, indications of network congestion by the network device alone cannot sufficiently help the terminal device to optimize scheduling for XR service data. To mitigate these issues, related technologies propose another scheduling method. In this method, a discard timer is proposed, terminal devices assign discard timers with varied durations with respect to PDU sets with varied PSI level-longer discard timers for high-PSI PDU sets, shorter ones for low-PSI PDU sets. Upon data arrival at the access stratum of the terminal device, the Packet Data Convergence Protocol (PDCP) initiates the corresponding discard timer. During network congestion, if data is waiting for a longer time at the terminal device side, PDU sets corresponding to shorter discard timers expire and are discarded earlier, PDU sets corresponding to longer ones are discarded later, increasing transmission probability for high-PSI PDU sets. However, since discard timer values are preconfigured in the terminal devices and cann't vary with dynamic congestion levels, therefore, scheduling of XR service data by the terminal device may still exhibit inaccuracies.

Based on the above issues, the embodiments of this application are described in detail below.

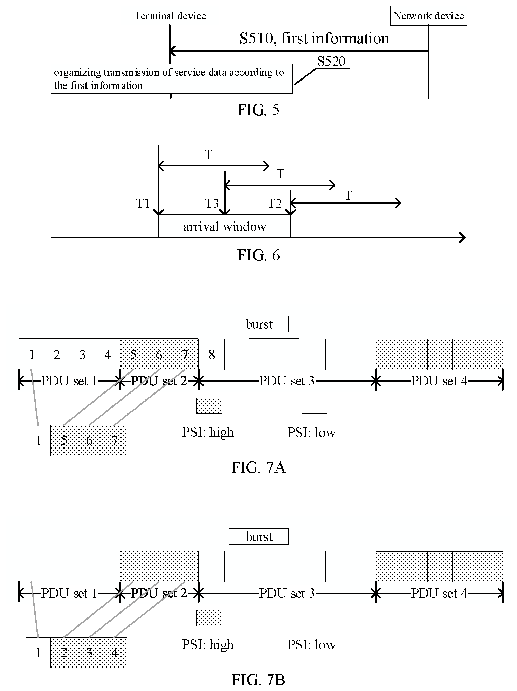

As shown in FIG. 5, the embodiments of this application provide a wireless communication method, including steps S510 to S520.

In step S510, a terminal device receives first information transmitted by a network device. The first information is configured to indicate resource information of radio resources allocated by the network device to the terminal device, such as the resource quantity of the radio resources. Further, the resource quantity of the radio resources may refer to the data volume that the radio resources can transmit, such as the number of bytes transmittable by the radio resources. As an example, the content indicated by the first information may be: "allocating radio resources capable of transmitting 1000 bytes of data to the terminal device."

In some implementations, the radio resources allocated by the network device to the terminal device correspond to a first time period, which helps improve the efficiency of the terminal device in scheduling service data. The first time period may refer to a future period, meaning the aforementioned radio resources are those the network device guarantees to allocate to the terminal device within the future period. Further, the first information may be configured to indicate the resource information of the radio resources that the network device guarantees to allocate to the terminal device within the future period, such as the resource quantity of the radio resources that the network device guarantees to allocate to the terminal device within the future period. Additionally, the first time period may also refer to a time interval from a past moment to a future moment.

In step S520, the terminal device organizes transmission of service data based on the first information. For example, if the first information indicates the resource quantity of the radio resources allocated by the network device to the terminal device, the terminal device may organize the transmission of service data according to the resource quantity.

In some implementations, the radio resources allocated by the network device to the terminal device may be configured to transmit first data. The first data may be data that conforms to priority characteristics of PDU sets, such as XR service data. Further, the service data of the XR service to be transmitted may include at least one data burst, such as a first data burst. Additionally, each data burst of the XR service may include one or more PDU sets, and each PDU set may correspond to a specific PSI level. For example, the service data of the XR service may be the video frame burst shown in FIG. 3, which includes four PDU sets corresponding to two PSI levels.

In some implementations, the first information may be transmitted when the network device detects network congestion. In this case, the first information may be configured to indicate the resource information of the radio resources that the network device guarantees to allocate to the terminal device during network congestion, enabling the terminal device to schedule service data more reasonably based on network conditions.

In the method shown in FIG. 5, the terminal device can schedule service data based on the resource information of the radio resources allocated by the network device, which helps improve scheduling accuracy and thus avoids negatively impacting user experience.

In some implementations, the first time period may be indicated by the first information, meaning the network device can indicate the first time period through the first information. In this case, the first information may be configured to indicate the resource information of the radio resources allocated by the network device to the terminal device within the first time period. By indicating the first time period through the first information, the network device can flexibly control a duration of the first time period.

In other implementations, the first time period may be preconfigured by the network device for the terminal device. For example, the network device may preconfigure the first time period for the terminal device before transmitting the first information. For instance, the network device may configure the first time period for the terminal device via a Radio Resource Control (RRC) message.

In some implementations, the first time period may also be determined based on a discard timer corresponding to the service data. For example, when the network device does not indicate the first time period, the terminal device may determine the first time period based on the discard timer corresponding to the service data. For instance, the first time period may be equal to the duration of the discard timer corresponding to the service data. When the discard timer expires, the resource quantity of the radio resources allocated by the network to the terminal device becomes invalid. Further, if the service data corresponds to multiple discard timers, the first time period may be determined based on the earliest expiring discard timer among multiple discard timers. For example, the first time period may be equal to the duration of the earliest expiring discard timer. Determining the first time period based on the discard timer corresponding to the service data helps adapt to the transmission requirements of the service data.

In some implementations, a starting moment of the first time period may be determined based on one or more of the following: a transmission moment of the first information; a starting moment of a first window; a center moment of the first window; a ending moment of the first window. Here, the first window is configured to indicate a time when the service data arrives at the access stratum of the terminal device, such as the arrival window of the video frame data of the XR service mentioned earlier.

In some implementations, the starting moment of the first time period may be determined based on the transmission moment of the first information. For example, the starting moment of the first time period may be the transmission moment of the first information, meaning the resource quantity indicated by the first information takes effect from the transmission moment of the first information and becomes invalid at the end of the first time period.

In other implementations, the starting moment of the first time period may also be determined based on the first window. Further, the starting moment of the first time period may be determined based on the starting moment, the ending moment, or a target moment within the first window. For example, as shown in FIG. 6, if the first time period is T, the starting moment of the first time period may be T1, T2, or T3.

In some implementations, the starting moment of the first time period may be the starting moment of the first window. In this case, the resource quantity indicated by the first information takes effect from the starting moment of the first window and becomes invalid at the end of the first time period. For example, as shown in FIG. 6, the resource quantity indicated by the first information takes effect from T1 and becomes invalid at T.

In some implementations, the starting moment of the first time period may be the ending moment of the first window. In this case, the resource quantity indicated by the first information takes effect from the ending moment of the first window and becomes invalid at the end of the first time period. At this point, all service data has arrived at the access stratum of the terminal device, allowing the terminal device to schedule the service data more comprehensively. For example, as shown in Fig. 6, the resource quantity indicated by the first information takes effect from T2 and becomes invalid at T.

In some implementations, the starting moment of the first time period may be a target moment within the first window, where the target moment may be a central moment of the first window. In this case, the resource quantity indicated by the first information takes effect from the target moment of the first window and becomes invalid at the end of the first time period. For example, as shown in FIG. 6, the resource quantity indicated by the first information takes effect from T3 and becomes invalid at T.

In some implementations, the first information is valid for M data bursts in the service data, where M is a positive integer greater than or equal to 1. For example, the first information may be valid for one data burst in the service data, meaning the resource quantity available to the terminal device for transmitting the data burst is the resource quantity indicated by the first information. Alternatively, the first information may be valid for multiple data bursts in the service data, meaning the resource quantity available to the terminal device for transmitting each of the multiple data bursts is the resource quantity indicated by the first information.

In some implementations, a value of M is determined based on protocol-predefined information and/or configuration information from the network device. Further, if the value of M is determined by the configuration information of the network device, the configuration information may be carried in an RRC message. Additionally, if the network device configures the value of M via the RRC message, the network device configures the value of M through a broadcast message or a dedicated message. For example, if the network device configures the value of M via the broadcast message, all terminal devices may adopt the same value of M. Alternatively, if the network device configures the value of M via the dedicated message, different terminal devices may use different values of M or the same value of M.

In some implementations, the aforementioned radio resources may also be configured to transmit multiple service data. In this case, the first information may be configured to indicate one or more of the following: resource information corresponding to each of the multiple XR services; common resource information corresponding to the multiple XR services. This allows the terminal device to schedule different service data based on the first information. For example, if the network device allocates a corresponding resource quantity for each XR service, the first information may indicate the resource quantities corresponding to each of the multiple XR services. As an example, the content indicated by the first information in this case could be: "XR service 1---resource quantity 1, XR service 2---resource quantity 2, ...". Alternatively, if the network device allocates a total resource quantity for multiple XR services collectively, the first information may indicate the total resource quantity corresponding to the multiple XR services. As an example, the content indicated by the first information in this case could be: "Service 1 and Service 2, allocated a total resource quantity of 1200 bytes".

In some implementations, the first information may also be configured to indicate information about the uplink resources included in the radio resources. For example, the quantity of uplink resources included in the radio resources may be indicated, allowing the terminal device to determine the transmittable transport blocks based on the quantity of uplink resources. For instance, the first information may indicate that the network device has allocated K uplink resources to the terminal device, with a total resource quantity of 2000 bytes. In this case, the terminal device may transmit K transport blocks, with a total data volume of 2000 bytes, where K is a positive integer greater than or equal to 1.

Furthermore, the aforementioned radio resources may include K radio resources, where K is a positive integer greater than or equal to 1. In this case, the first information is further configured to indicate one or more of the following: the cell(s) corresponding to each of the K uplink resources; the resource quantity corresponding to each of the K uplink resources; the time-frequency location information corresponding to the K uplink resources.

In some implementations, the first information may also be configured to indicate the cell(s) corresponding to each of the K uplink resources, helping the terminal device determine which cell(s) to transmit the corresponding service data to. For example, the first information may indicate which cells the K uplink resources are located in and how many uplink resources each cell has. As an example, the content indicated by the first information could be: "four uplink resources are located in Cell 1 and Cell 2, with Cell 1 having three uplink resources and Cell 2 having one uplink resource."

In some implementations, the first information may also be configured to indicate the resource quantity corresponding to each of the K uplink resources, helping the terminal device reasonably allocate the service data to be transmitted on each uplink resource. For example, the first information may indicate the data volume that each of the K uplink resources can transmit. As an example, the content indicated by the first information could be: "among two uplink resources, Uplink Resource 1 can transmit 1000 bytes, and Uplink Resource 2 can transmit 2000 bytes."

In some implementations, the first information may also be configured to indicate the time-frequency location information corresponding to the K uplink resources, helping the terminal device determine the time-frequency locations of each uplink resource. For example, the first information may indicate a duration from the starting moment as a reference moment to the time-frequency location of each of the K uplink resources. Alternatively, the first information may also indicate a subframe number, a slot number, or an orthogonal frequency-division multiplexing (OFDM) symbol number where each of the K uplink resources is located.

In some implementations, the first information may also be configured to simultaneously indicate multiple items among: the cells corresponding to each of the K uplink resources, the resource quantities corresponding to each of the K uplink resources, and the time-frequency location information corresponding to the K uplink resources.

In some implementations, a transmission time of the first information may occur before the starting moment of the first window, meaning the first information is transmitted to the terminal device before the service data arrives at the access stratum of the terminal device.

In some implementations, the transmission time of the first information may also occur within the first window, meaning the first information is transmitted to the terminal device during the time range when the service data arrives at the access stratum of the terminal device. In this case, if the starting moment of the first time period is the starting moment of the first window, part of the resource information indicated by the first information has already expired. For example, if the resource information indicated by the first information is a resource quantity, a portion of the resource quantity is no longer valid.

In some implementations, the transmission time of the first information may also occur after the first window, meaning the first information is transmitted to the terminal device after the service data arrives at the access stratum of the terminal device. In this case, if the starting moment of the first time period is the start of the first window, part of the radio resources related to the resource information indicated by the first information has already expired. For example, if the resource information indicated by the first information is a resource quantity, a portion of that resource quantity is no longer valid.

In some implementations, if the terminal device has already received uplink data from higher layers before obtaining the first information, the terminal device may organize a transmission of this portion of uplink data received according to the Logical Channel Prioritization (LCP) principle. For data received from higher layers after obtaining the first information, the terminal device may organize the transmission based on the first information.

In some implementations, the radio resources allocated by the network device to the terminal device may include one or more of the following: dynamically scheduled resources, semi-statically configured resources, and pre-allocated resources.

In some implementations, the radio resources allocated by the network device to the terminal device may include dynamically scheduled resources and pre-allocated resources. For example, if the first information indicates that the network device has allocated 2000 bytes of resource quantity of radio resources to the terminal device, and the network device has additionally pre-allocated 450 bytes of Configured Grant (CG) resources to the terminal device for transmitting service data, this means the network device will also dynamically allocate 1550 bytes of radio resources to the terminal device for transmission.

In some implementations, the radio resources allocated by the network device to the terminal device may only include dynamically scheduled resources. For example, if the first information indicates that the network device has allocated 2000 bytes of resource quantity of radio resources to the terminal device, and the network device has pre-allocated 450 bytes of CG resources to the terminal device for transmitting service data, this means the terminal device can transmit service data on a total of 2450 bytes of radio resources. Further, the network device may indicate a type of radio resources allocated to the terminal device. For example, the network device may indicate the type of radio resources through the first information. For example, the first information may indicate whether the allocated resources are dynamic resources or all resources.

In some implementations, the radio resources allocated by the network device to the terminal device may include dynamically scheduled resources, semi-statically configured resources, and pre-allocated resources-i.e., all available radio resources.

In some implementations, the first information may also be configured to indicate one or more of the following: a correspondence between radio resources and cells, and a correspondence between radio resources and base stations.

In some implementations, the first information may also be configured to indicate the correspondence between radio resources and cells. For example, when the terminal device is configured with carrier aggregation, the first information may indicate the serving cell(s) corresponding to the radio resources. For instance, the first information may indicate whether the radio resources allocated by the network device are distributed in the current cell, other serving cells, or both. Further, the first information may also indicate the cell identifiers where the radio resources are distributed.

In other implementations, the first information may also be configured to indicate a correspondence between radio resources and base stations. For example, when the terminal device is simultaneously connected to multiple base stations (i.e., multi-connectivity), the first information may further indicate the base station to which the radio resources belong. For instance, the first information may indicate that the above radio resources are uplink resources usable on the current base station or other base stations. Further, the first information may also indicate the identifiers of the base stations where the radio resources are located, such as the Master Cell Group (MCG) or the Secondary Cell Group (SCG).

In some implementations, the first information may also be configured to simultaneously indicate the correspondence between radio resources and cells and the correspondence between radio resources and base stations.

In some implementations, if the resource information indicated by the first information includes the resource quantity of radio resources allocated by the network device to the terminal device, the first information may also include second information. The second information may be configured to indicate the allocation probability of at least a portion of the resource quantity allocated by the network device to the terminal device. For example, the second information may indicate the probability of the network device allocating additional resource quantities beyond what is indicated by the first information to the terminal device. For instance, the content which the second information may indicate is: "there is an 80% probability of allocating an additional 1000 bytes of uplink resources."

In some implementations, the method shown in FIG. 5 further includes Step S530. In Step S530, the terminal device determines how to generate the Transport Block (TB) based on one or more of the following: the first resource quantity, which may be determined based on the resource information of radio resources indicated by the first information; the amount of data pending transmission in a buffer of the terminal device; the total data volume of the current data burst minus the amount of data from the current data burst that has already arrived in the buffer of the terminal device (i.e., data belonging to the current burst but not yet arrived in the buffer of the terminal device).

In some implementations, if the first resource quantity is less than or equal to the data volume of the first data burst to be transmitted, the terminal device may determine the data to be transmitted via the TB based on the PSI of the PDU sets in the first data burst. Here, the first resource quantity is determined based on the resource quantity indicated by the first information and can be configured to transmit the first data burst. For example, the terminal device may determine the PDU sets to be transmitted via the TB in descending order of PSI, prioritizing the transmission of PDU sets with higher PSI levels in the first data burst and discarding those with lower PSI levels. For instance, if the first data burst includes five PDU sets but the first resource quantity can only transmit four PDU sets, the terminal device may discard the PDU set with the lowest PSI level and transmit the remaining four PDU sets with higher PSI levels via the TB. Alternatively, the terminal device may first transmit the four PDU sets with higher PSI levels and refrain from transmitting the PDU set with the lowest PSI level, waiting for the discard timer of the PDU set with the lowest PSI level to expire and automatically discard the PDU set with the lowest PSI level.

In some implementations, if the first resource quantity is less than or equal to the data volume of the first data burst to be transmitted, for data in PDU sets with the same PSI in the first data burst, the terminal device may determine the data to be transmitted via the TB based on the order in which the data arrives at the access stratum of the terminal device. For example, the terminal device may preferentially transmit PDU sets that arrive earlier at the access stratum of the terminal device. For instance, when the first resource quantity is less than the data volume of the first data burst to be transmitted and all PDU sets in the first data burst have the same PSI, the terminal device may prioritize transmitting the PDU sets that arrive earlier at the access stratum of the terminal device and discard those that arrive later at the access stratum. Similarly, when the terminal device needs to choose one PDU set between two PDU sets with the same PSI level for transmission via the TB, the terminal device may select the one that arrived earlier at the access stratum of the terminal device. For another example, for a first data burst containing PDU sets with multiple PSI levels, the terminal device may transmit the PDU sets in order of PSI levels of the PDU sets. If not all PDU sets with a certain PSI level can be transmitted, the terminal device may determine the PDU sets to be transmitted based on the order in which all PDU sets with the PSI level arrived at the access stratum.

In some implementations, the first resource quantity equals the resource quantity of the radio resources, meaning the first resource quantity is a total resource quantity indicated by the first information. For example, if the first information indicates a resource quantity of 1000 bytes, the first resource quantity is 1000 bytes.

In other implementations, the first resource quantity may be determined based on the allocation probabilities corresponding to each of multiple resource quantities within the radio resources. For example, the radio resources allocated by the network device to the terminal device may be tiered resources, and the resource quantity indicated by the first information may include the resource quantities of radio resources with different tiers, each tier corresponding to a different probability. The first resource quantity can then be determined as a sum of the products of the resource quantity of each tier and the probability corresponding to the resource quantity of each tier. For instance, if the first information indicates a Tier 1 resource quantity of 1000 bytes (with a 100% probability) and a Tier 2 resource quantity of 400 bytes (with an 80% probability), the first resource quantity would be 1000 × 100% + 400 × 80% = 1320 bytes.

The following describes the process by which the sender PDCP entity assigns PDCP SNs to data. Note that the description below uses the terminal-side PDCP as an example, but the embodiments of this application are not limited to the terminal-side PDCP. For downlink data, the sender PDCP entity may also be the base station-side PDCP. The difference is that, for the base station-side sender PDCP, the first information is obtained from the algorithm module of the base station rather than from the peer entity.

In some implementations, the assignment of PDCP sequence numbers (SNs) to service data may occur before the LCP process or after the LCP process. The following examples are illustrated in FIG. 7. As shown in the figure, the service data consists of PDU set 1 (containing four PDUs), PDU set 2 (containing three PDUs), and the first PDU of PDU set 3, totaling eight PDUs. The PSI level order of the PDU sets is: PDU set 2 > PDU set 1 = PDU set 3. Assume the first information indicates a resource quantity sufficient to transmit four PDUs.

As one example, the terminal device may assign PDCP SNs to the service data before the LCP process. That is, the terminal device first assigns PDCP SNs to the service data, then determines which service data to transmit via the TB, and finally places the service data into the TB. Referring to FIG. 7A, the terminal device first assigns PDCP SNs 1, 2, 3, 4, 5, 6, 7, and 8 to the eight PDUs. The terminal device then determines, based on PSI levels, that the PDUs to be transmitted via the TB are those with PDCP SNs 1, 5, 6, and 7.

As another example, the assignment of PDCP SNs to the service data may occur after the LCP process. That is, the terminal device first determines which service data to transmit via the TB, then assigns consecutive PDCP SNs to the service data, and finally places the service data into the TB. This avoids the network device spending extra time reordering data due to receiving PDCP SNs out of sequence. Referring to FIG. 7B, the terminal device first determines, based on PSI levels, that the PDUs to be transmitted via the TB are the first PDU of PDU set 1 and all PDUs of PDU set 2. The terminal device then assigns PDCP SNs 1, 2, 3, and 4 to the four PDUs. Further, the network device may configure the terminal device to allow PDCP SN assignment to the service data after the LCP process. For example, the network device may configure the terminal device via an RRC message, either per flow/data radio bearer (DRB)/session alone for the terminal device or uniformly for the entire terminal device.

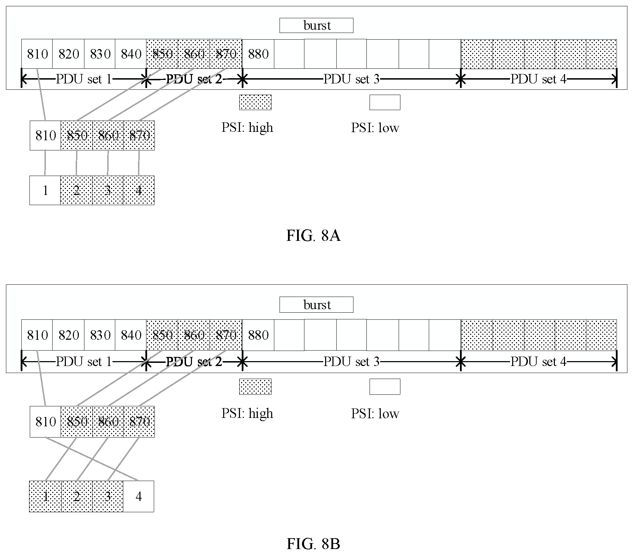

In some implementations, the PDCP SNs of service data may be determined based on an order in which the service data arrives at the access stratum of the terminal device or based on the PSI of the service data. The following examples are illustrated in FIG. 8. As shown in the figure, the service data is placed into the burst in the order of arrival at at the access stratum of the terminal device: PDU set 1 (containing four PDUs), PDU set 2 (containing three PDUs), and the first PDU of PDU set 3. The PSI level order of the PDU sets is: PDU set 2 > PDU set 1 = PDU set 3.

Assuming the assignment of PDCP SNs to service data occurs after the LCP process, meaning the terminal device first determines the PDUs to be transmitted via the TB and then assigns PDCP SNs to the PDUs. For example, in FIG. 8, the PDUs determined for transmission via the TB are 810, 850, 860, and 870. As one example, the PDCP SNs for 810, 850, 860, and 870 may be determined based on the order in which the PDUs arrive at the access stratum of the terminal device. For instance, the terminal device may assign earlier PDCP SNs to PDUs that arrive earlier at the access stratum of the terminal device and later PDCP SNs to those that arrive later. Referring to FIG. 8A, the terminal device assigns PDCP SNs 1, 2, 3, and 4 to 810, 850, 860, and 870, respectively. As another example, the PDCP SNs for 810, 850, 860, and 870 may also be determined based on the PSI of the PDUs. For instance, the terminal device may assign earlier PDCP SNs to PDUs with higher PSI levels and later PDCP SNs to those with lower PSI levels. For PDUs with the same PSI, the PDCP SNs are assigned based on the arrival order at the access stratum. Referring to FIG. 8A, the terminal device assigns PDCP SNs 4, 1, 2, and 3 to 810, 850, 860, and 870, respectively.

In some implementations, the order of the service data in the TB is determined based on the order of the PDCP SNs of the service data. For example, the order of the service data in the TB may align with the order of the PDCP SNs of of the service data, facilitating sequential reception of the service data by the network device according to the PDCP SNs.

In other implementations, the order of service data in the TB may be arbitrary.

In some implementations, the first information may be carried in Downlink Control Information (DCI), Medium Access Control (MAC) Control Element (CE), Radio Link Control (RLC) Control PDU, or PDCP Control PDU. Further, if the first information is carried in DCI, the network device may transmit the DCI N times, where N is a positive integer greater than 1, to ensure the terminal device receives the first information. Moreover, the N DCIs may be transmitted in the same subframe, the same slot, or the same cell, or in different subframes, slots, or cells.

In some implementations, if the resource quantity indicated by the first information is less than the data volume of the first data burst to be transmitted, the terminal device may record information about the data in the first data burst that could not be transmitted via the TB. For example, the terminal device may record the volume of untransmitted data, such as the number of PDU sets or the number of PDUs. Alternatively, the terminal device may record the data volume corresponding to each PSI level among the untransmitted data.

In some implementations, the terminal device may report the information about the data in the first data burst that could not be transmitted via the TB to the network device, enabling the network device to adjust the radio resources allocated to the terminal device based on the information. For instance, the terminal device may report the information immediately after recording the information or periodically. Further, the terminal device may report the information to the application layer via the Quality of Experience (QoE) procedure or to the network device via RRC or Non-Access Stratum (NAS) messages.

In some implementations, if the resource quantity indicated by the first information exceeds the data volume of the first data burst to be transmitted, the terminal device may use the remaining resources after transmitting the first data burst to transmit data from other data bursts or non-XR services, thereby maximizing the utilization of the radio resources allocated by the network device.

In some implementations, the radio resources allocated by the network device to the terminal device may reside in an unlicensed spectrum cell, which requires successful contention before use.

In some implementations, if the terminal device has not received the first information when determining the data to be transmitted via the TB, the terminal device may determine the data based on the PSI levels of the service data or the order in which the service data arrives at the access stratum of the terminal device. Further, the terminal device may autonomously decide the scheduling strategy or decide the scheduling strategy based on configurations from the network device. Moreover, the network device may respectively configure which scheduling strategy used for each flow/service/DRB/logical channel (LCH)/logical channel group (LCG)/MAC entity of the same terminal device or uniformly configure a single strategy for the same terminal device.

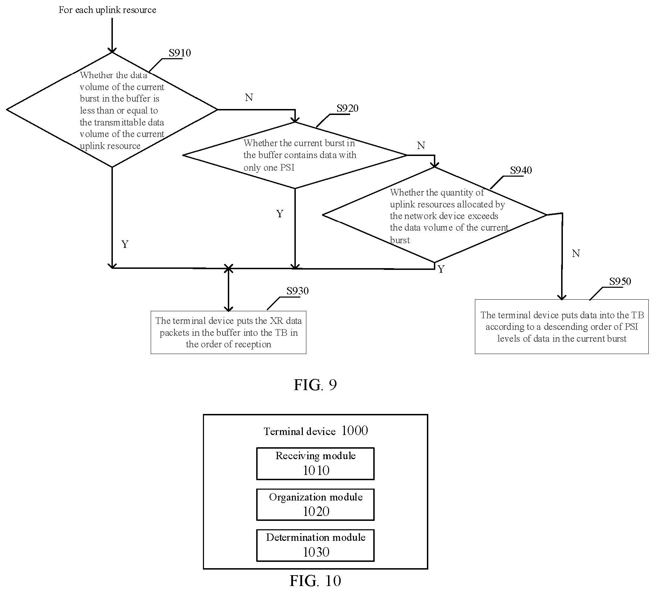

As an example, the method described in this embodiment is illustrated in FIG. 9, which shows a schematic flowchart of the terminal device scheduling XR service data on one uplink resource. The steps include S910 to S950. The service data of the XR service is the data in the current burst in the buffer of the terminal device.

In step S910, the terminal device determines whether the data volume of the current burst in the buffer of the terminal device is less than or equal to the data volume transmittable by the current uplink resource. If yes, proceed to step S930; otherwise, proceed to step S920.

In step S920, the terminal device checks whether the data in the current burst has only one PSI level. If yes, proceed to step S930; otherwise, proceed to step S940.

In step S930, the terminal device places the data of the current burst in the buffer of the terminal device into the TB in the order of reception.

In step S940, the terminal device determines whether the resource quantity allocated by the network device (i.e., the data volume transmittable by the resources in the first time period) exceeds the data volume of the current burst. If yes, proceed to step S930; otherwise, proceed to step S950.

In step S950, the terminal device places the data of the current burst into the TB in descending order of the PSI levels of the data of the current burst.

It should be noted that the above process assumes the terminal device has received the first information from the network device. However, the network device may not transmit the first information before the first uplink resource corresponding to the current burst. Thus, when generating the TB, the terminal device might not have received the first information and cannot perform the check in step S940. In this case, the terminal device may adopt the scheduling strategy in step S930 or step S950 for the data of the current burst. The specific strategy may be autonomously determined by the terminal device or based on configurations from the network device. Based on the scheduling flow in FIG. 9, the terminal device can adopt reasonable strategies based on network conditions, improving scheduling accuracy and avoiding negative impacts on user experience.

The preceding sections described the method embodiments of this application in detail with reference to FIGs. 1 to 9. Below, the device embodiments of this application are described in detail with reference to FIGs. 10 to 12. Note that descriptions of the method embodiments and descriptions of device embodiments correspond to each other, and thus, details not repeated here can be found in the preceding method embodiments.

FIG. 10 is a schematic structural diagram of a terminal device provided by an embodiment of this application. A terminal device 1000 in FIG. 10 includes a receiving module 1010 and an organization module 1020. The receiving module 1010 is configured to receive first information transmitted by a network device. The first information is configured to indicate resource information of radio resources allocated by the network device to the terminal device, where the radio resources correspond to a first time period. The organization module 1020 is configured to organize the transmission of service data based on the first information. In some implementations, the radio resources are configured to transmit first data.

In some implementations, the first data is XR service data.

In some implementations, the first time period is indicated by the first information, or the first time period is preconfigured by the network device for the terminal device.

In some implementations, the first time period is determined by a discard timer corresponding to the service data.

In some implementations, if the service data corresponds to multiple discard timers, the first time period is determined based on the earliest expiring discard timer among the multiple discard timers.

In some implementations, the starting moment of the first time period is at least one of the following: the transmission moment of the first information; the starting moment of a first window, where the first window is configured to indicate the time when the service data arrives at the access stratum of the terminal device; the center moment of the first window; the ending moment of the first window.

In some implementations, the first information is valid for M data bursts in the service data, where M is a positive integer greater than or equal to 1.

In some implementations, the value of M is determined based on protocol-predefined information and/or configuration information from the network device.

In some implementations, the radio resources are configured to transmit service data of multiple XR services, and the first information is configured to indicate one or more of the following: resource information corresponding to each of the multiple XR services; common resource information corresponding to the multiple XR services.

In some implementations, the first information is configured to indicate information about uplink resources included in the radio resources.

In some implementations, the radio resources include K uplink resources, K is a positive integer greater than or equal to 1, and the first information is further configured to indicate one or more of the following: cell(s) corresponding to each of the K uplink resources; resource quantity corresponding to each of the K uplink resources; time-frequency location information corresponding to the K uplink resources.

In some implementations, the service data is associated with a first window, which is configured to indicate the time when the service data arrives at the access stratum of the terminal device. The transmission moment of the first information satisfies one of the following: before the starting moment of the first window; within the first window; after the first window.

In some implementations, the radio resources include one or more of the following: dynamically scheduled resources; semi-statically configured resources; pre-allocated resources.

In some implementations, the first information is further configured to indicate one or more of the following: a correspondence between radio resources and cells; a correspondence between radio resources and base stations.

In some implementations, the resource information includes the resource quantity of the radio resources, and the first information further includes: second information, configured to indicate an allocation probability of at least a part of the resource quantity.

In some implementations, the terminal device further includes a determination module 1230, configured to determine how to generate a Transport Block (TB) based on one or more of the following: a first resource quantity, determined based on the resource information of the radio resources indicated by the first information; the amount of data pending transmission in the buffer of the terminal device; the total data volume of the current data burst minus the amount of data from the current burst that has already arrived in the buffer of the terminal device.

In some implementations, if the first resource quantity is less than or equal to the data volume of the first data burst to be transmitted, the data to be transmitted via the TB is determined based on the PSI of the PDU sets in the first data burst.

In some implementations, for data in PDU sets with the same PSI in the first data burst, the data to be transmitted via the TB is determined based on an order in which the data arrives at the access stratum of the terminal device.

In some implementations, the first resource quantity equals the resource quantity of the radio resources, or the first resource quantity is determined based on the allocation probabilities corresponding to multiple resource quantities within the radio resources.

In some implementations, PDCP SNs are assigned to the service data before the LCP process, or after the LCP process.

In some implementations, the PDCP SNs of the service data are determined based on: the order in which the service data arrives at the access stratum of the terminal device; or the PSI of the service data.

In some implementations, the order of the service data in the TB is determined based on the order of the PDCP SNs of the service data.

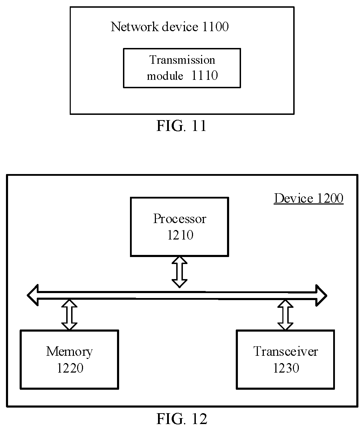

FIG. 11 is a schematic structural diagram of the network device provided by an embodiment of this application. The network device 1100 in FIG. 11 includes a transmission module 1110, configured to transmit first information to the terminal device. The first information is configured to indicate resource information of radio resources allocated by the network device to the terminal device, where the radio resources correspond to a first time period. In some implementations, the the radio resources are configured to transmit first data and are configured to organize service data.

In some implementations, the first data is XR service data.

In some implementations, the first time period is indicated by the first information, or the first time period is preconfigured by the network device for the terminal device.

In some implementations, the first time period is determined by a discard timer corresponding to the service data.

In some implementations, if the service data corresponds to multiple discard timers, the first time period is determined based on the earliest expiring discard timer among the multiple discard timers.

In some implementations, the starting moment of the first time period is at least one of the following: the transmission moment of the first information; the starting moment of a first window, where the first window is configured to indicate the time when the service data arrives at the access stratum of the terminal device; the center moment of the first window; the ending moment of the first window.

In some implementations, the first information is valid for M data bursts in the service data, where M is a positive integer greater than or equal to 1.

In some implementations, the value of M is determined based on protocol-predefined information and/or configuration information from the network device.

In some implementations, the radio resources are configured to transmit service data of multiple XR services, and the first information is configured to indicate one or more of the following: resource information corresponding to each of the multiple XR services; common resource information corresponding to the multiple XR services.

In some implementations, the first information is configured to indicate information about uplink resources included in the radio resources.

In some implementations, the radio resources include K uplink resources, K is a positive integer greater than or equal to 1, and the first information is further configured to indicate one or more of the following: cell(s) corresponding to each of the K uplink resources; resource quantity corresponding to each of the K uplink resources; time-frequency location information corresponding to the K uplink resources.

In some implementations, the service data is associated with a first window, which is configured to indicate the time when the service data arrives at the access stratum of the terminal device. The transmission moment of the first information satisfies one of the following: before the starting moment of the first window; within the first window; after the first window.

In some implementations, the radio resources include one or more of the following: dynamically scheduled resources; semi-statically configured resources; pre-allocated resources.

In some implementations, the first information is further configured to indicate one or more of the following: a correspondence between radio resources and cells; a correspondence between radio resources and base stations.

In some implementations, the resource information includes the resource quantity of the radio resources, and the first information further includes: second information, configured to indicate the allocation probability of at least a part of the resource quantity.

In some implementations, the first resource quantity equals the resource quantity of the radio resources, or the first resource quantity is determined based on the allocation probabilities corresponding to multiple resource quantities within the radio resources. The first resource quantity is determined based on the resource information of the radio resources indicated by the first information.

In some implementations, PDCP SNs are assigned to the service data before the LCP process, or after the LCP process.

In some implementations, the PDCP SNs of the service data are determined based on: the order in which the service data arrives at the access stratum of the terminal device; or the PSI of the service data.

In some implementations, an order of service data in the TB is determined based on the order of the PDCP SNs of service data.

FIG. 12 is a schematic structural diagram of a communication device provided by an embodiment of this application. The communication device 1200 in FIG. 12 may be used to implement the methods described in the foregoing method embodiments. The device 1200 may be a chip, a terminal device, or a base station.

The communication device 1200 may include one or more processors 1210. The processor 1210 may support the device 1200 in implementing the methods described in the preceding method embodiments. The processor 1210 may be a general-purpose processor or a dedicated processor. For example, the processor may be a Central Processing Unit (CPU). Alternatively, the processor may also be another general-purpose processor, a Digital Signal Processor (DSP), an Application-Specific Integrated Circuit (ASIC), a Field Programmable Gate Array (FPGA), or other programmable logic device, a discrete gate or a transistor logic device, a discrete hardware component, and the like. A general-purpose processor may be a microprocessor, or the processor may also be any conventional processor.

The communication device 1200 may further include one or more memories 1220. A program is stored on the memory 1220, and the program may be executed by the processor 1210, causing the processor 1210 to perform the methods described in the preceding method embodiments. The memory 1220 may be independent of the processor 1210 or integrated into the processor 1210.

The communication device 1200 may further include a transceiver 1230. The processor 1210 may communicate with other devices or chips via the transceiver 1230. For example, the processor 1210 may transmit or receive data with other devices or chips through the transceiver 1230.

It should be understood that, in the embodiments of this application, the processor 1210 may be a general-purpose Central Processing Unit (CPU), microprocessor, Application-Specific Integrated Circuit (ASIC), or one or more integrated circuits configured to execute related programs to implement the technical solutions provided in the embodiments of this application.

The memory 1220 may include read-only memory (ROM) and random access memory (RAM), providing instructions and data to the processor 1210. A portion of the processor 1210 may also include non-volatile random access memory (NVRAM). For example, the processor 1210 may also store device type information.

During implementation, each step of the foregoing methods may be completed by integrated hardware logic circuits in the processor 1210 or instructions in the form of software. The method for requesting uplink transmission resources disclosed in the embodiments of this application may be directly implemented by hardware processors or a combination of hardware and software modules in the processors. The software modules may be located in mature storage medium such as RAM, flash memory, ROM, programmable read-only memory (PROM), electrically erasable programmable memory (EEPROM), or registers. The storage medium is located in the memory 1220, and the processor 1210 reads information from the memory 1220 and completes steps of the foregoing methods in combination with the hardware of the storage medium. To avoid repetition, details are not described here again.

It should be understood that, in the embodiments of this application, the processor 1210 may be a Central Processing Unit (CPU), or the processor may also be another general-purpose processor, a Digital Signal Processor (DSP), an Application-Specific Integrated Circuit (ASIC), a Field Programmable Gate Array (FPGA), or other programmable logic device, discrete gate or transistor logic device, discrete hardware component, and the like. A general-purpose processor may be a microprocessor, or the processor may also be any conventional processor.

The embodiments of this application further provide a computer-readable storage medium for storing programs. The computer-readable storage medium may be applied to the terminal device or the base station provided in the embodiments of this application, and the program causes the computer to perform the wireless communication methods in the various embodiments of this application.

The embodiments of this application further provide a computer program product. The computer program product includes a program. The computer program product may be applied to the terminal device or the base station provided in the embodiments of this application, and the program causes the computer to perform the wireless communication methods in the various embodiments of this application.

The embodiments of this application further provide a computer program. The computer program may be applied to the terminal device or the base station provided in the embodiments of this application, and the computer program causes the computer to perform the wireless communication methods in the various embodiments of this application.

It should be understood that, in the embodiments of this application, "B corresponding to A" means that B is associated with A, and B can be determined based on A. However, it should also be understood that determining B based on A does not mean determining B solely based on A; B may also be determined based on A and/or other information.

It should be understood that the term "and/or" in this document describes an association relationship between associated objects, indicating that three relationships may exist. For example, "A and/or B" may indicate: A alone, both A and B, or B alone. In addition, the character "/" in this document generally indicates an "or" relationship between the associated objects.

It should be understood that, in the various embodiments of this application, the sequence numbers of the processes do not imply an order of execution. The execution order of the processes should be determined by the functions and internal logic of the execution order of the processes and should not impose any limitation on the implementation process of the embodiments of this application.

In the several embodiments provided in this application, it should be understood that the disclosed systems, devices, and methods may be implemented in other ways. For example, the device embodiments described above are merely illustrative. For example, the division of units is merely a logical functional division, and actual implementation may involve other divisions. For example, multiple units or components may be combined or integrated into another system, or some features may be omitted or not implemented. Additionally, the displayed or discussed mutual couplings, direct couplings, or communication connections may be indirect couplings or communication connections through some interfaces, devices, or units, and may be electrical, mechanical, or otherwise implemented.

The units described as separate components may or may not be physically separated. The components displayed as units may or may not be physical units, meaning they may be located in one place or distributed across multiple network units. Some or all of the units may be selected according to actual needs to achieve objectives of the embodiments.

Furthermore, the functional units in the various embodiments of this application may be integrated into one processing unit, or each unit may exist physically alone, or two or more units may be integrated into one unit.

In the above embodiments, the implementation may be wholly or partially achieved through software, hardware, firmware, or any combination thereof. When implemented in software, the implementation may be wholly or partially in the form of a computer program product. The computer program product includes one or more computer instructions. When the computer program instructions are loaded and executed on a computer, the processes or functions described in the embodiments of this application are wholly or partially generated. The computer may be a general-purpose computer, a special-purpose computer, a computer network, or another programmable device. The computer instructions may be stored in a computer-readable storage medium or transmitted from one computer-readable storage medium to another. For example, the computer instructions may be transmitted from a website, a computer, a server, or a data center to another website, computer, server, or data center via wired (e.g., coaxial cable, optical fiber, Digital Subscriber Line (DSL)) or wireless (e.g., infrared, wireless, microwave, and the like) means. The computer-readable storage medium may be any available medium that can be read by a computer or a data storage device such as a server or a data center integrating one or more available media. The available medium may be a magnetic medium (e.g., floppy disk, hard disk, magnetic tape), an optical medium (e.g., Digital Video Disc (DVD)), or a semiconductor medium (e.g., Solid State Disk (SSD)), the like.

The foregoing descriptions are merely specific implementations of this application. However, the scope of protection of this application is not limited thereto. Any person skilled in the art can easily conceive of modifications or replacements within the technical scope disclosed in this application, which shall be covered by the protection scope of this application.

## Claims

1. A wireless communication method, comprising:
receiving, by a terminal device, first information transmitted by a network device, wherein the first information is configured to indicate resource information of radio resources allocated by the network device to the terminal device, the radio resources correspond to a first time period, and the terminal device organizes transmission of service data according to the first information.

2. The method according to claim 1, wherein the radio resources are configured to transmit first data.

3. The method according to claim 2, wherein the first data is Extended Reality (XR) service data.

4. The method according to any one of claims 1 to 3, wherein the first time period is indicated by the first information; or, the first time period is preconfigured by the network device for the terminal device.

5. The method according to any one of claims 1 to 3, wherein the first time period is determined by a discard timer corresponding to the service data.

6. The method according to claim 5, wherein, in the case that the service data corresponds to multiple discard timers, the first time period is determined based on the earliest expiring discard timer among the multiple discard timers.

7. The method according to any one of claims 1 to 6, wherein the starting moment of the first time period is at least one of the following:
a transmission moment of the first information;
a starting moment of a first window, wherein the first window is configured to indicate a time upon the service data arriving at an access stratum of the terminal device;
a center moment of the first window;
an ending moment of the first window.

8. The method according to any one of claims 1 to 7, wherein the first information is valid for M data bursts in the service data, wherein M is a positive integer greater than or equal to 1.

9. The method according to claim 8, wherein a value of M is determined based on protocol-predefined information and/or configuration information from the network device.

10. The method according to any one of claims 1 to 9, wherein the radio resources are configured to transmit service data of multiple XR services, and the first information is configured to indicate one or more of the following:
resource information corresponding to each of the multiple XR services;
common resource information corresponding to the multiple XR services.

11. The method according to any one of claims 1 to 10, wherein the first information is configured to indicate information about uplink resources included in the radio resources.

12. The method according to claim 11, wherein the radio resources include K uplink resources, where K is a positive integer greater than or equal to 1, and the first information is further configured to indicate one or more of the following:
cells corresponding to each of the K uplink resources;
resource quantity corresponding to each of the K uplink resources;
time-frequency location information corresponding to the K uplink resources.

13. The method according to any one of claims 1 to 12, wherein the service data is associated with a first window, the first window is configured to indicate a time upon the service data arriving at an access stratum of the terminal device, and a transmission moment of the first information satisfies one of the following:
before a starting moment of the first window;
within the first window;
after the first window.

14. The method according to any one of claims 1 to 13, wherein the radio resources include one or more of the following:
dynamically scheduled resources;
semi-statically configured resources;
pre-allocated resources.

15. The method according to any one of claims 1 to 14, wherein the first information is further configured to indicate one or more of the following:
a correspondence between the radio resources and cells;
a correspondence between the radio resources and base stations.

16. The method according to any one of claims 1 to 15, wherein the resource information includes a resource quantity of the radio resources, and the first information further includes: second information, the second information is configured to indicate an allocation probability of at least a part of the resource quantity.

17. The method according to any one of claims 1 to 16, wherein the method further includes: determining, by the terminal device, a manner of generating a transport block (TB) based on one or more of the following:
a first resource quantity, determined based on the resource information of the radio resources indicated by the first information;
an amount of data pending transmission in a buffer of the terminal device;
a total data volume of a current data burst minus an amount of data from the current data burst that has already arrived in the buffer of the terminal device.

18. The method according to claim 17, wherein: in the case that the first resource quantity is less than or equal to a data volume of a first data burst to be transmitted, data to be transmitted via the TB is determined based on Protocol Data Unit (PDU) Set Importance (PSI) of PDU sets in the first data burst.

19. The method according to claim 18, wherein, for data of PDU sets with the same PSI in the first data burst, data to be transmitted via the TB is determined based on an order in which the data arrives at the access stratum of the terminal device.

20. The method according to claim 18 or 19, wherein:
the first resource quantity equals the resource quantity of the radio resources; or,
the first resource quantity is determined based on allocation probabilities corresponding to each of multiple resource quantities in the radio resources.

21. The method according to any one of claims 1 to 20, wherein:
a time for assigning Packet Data Convergence Protocol Sequence Numbers (PDCP SNs) to the service data is earlier than a time for a Logical Channel Prioritization (LCP) process; or,
the time for assigning the PDCP SNs to the service data is later than the time for the LCP process.

22. The method according to any one of claims 1 to 21, wherein:
the PDCP SNs of the service data are determined based on an order in which the service data arrives at the access stratum of the terminal device; or,
the PDCP SNs of the service data are determined based on the PSI of the service data.

23. The method according to any one of claims 1 to 22, wherein an order of the service data in the TB is determined based on an order of the PDCP SNs of the service data.

24. A wireless communication method, including:
transmitting, by a network device, first information to a terminal device, wherein the first information is configured to indicate resource information of radio resources allocated by the network device to the terminal device, the radio resources correspond to a first time period, and the radio resources are configured to organize service data.

25. The method according to claim 24, wherein the radio resources are configured to transmit first data.

26. The method according to claim 25, wherein the first data is Extended Reality (XR) service data.

27. The method according to any one of claims 24 to 27, wherein:
the first time period is indicated by the first information; or,
the first time period is preconfigured by the network device for the terminal device.

28. The method according to any one of claims 24 to 27, wherein:
the first time period is determined by a discard timer corresponding to the service data.

29. The method according to claim 28, wherein: in the case that the service data corresponds to multiple discard timers, the first time period is determined based on an earliest expiring discard timer among the multiple discard timers.

30. The method according to any one of claims 24 to 29, wherein a starting moment of the first time period is at least one of the following:
a transmission moment of the first information;
a starting moment of a first window, the first window is configured to indicate a time upon the service data arriving at an access stratum of the terminal device;
a center moment of the first window;
an ending moment of the first window.

31. The method according to any one of claims 24 to 30, wherein the first information is valid for M data bursts in the service data, where M is a positive integer greater than or equal to 1.

32. The method according to claim 31, wherein a value of M is determined based on protocol-predefined information and/or configuration information of the network device.

33. The method according to any one of claims 24 to 32, wherein the radio resources are configured to transmit service data of multiple XR services, and the first information is configured to indicate one or more of the following:
resource information corresponding to each of the multiple XR services;
common resource information corresponding to the multiple XR services.

34. The method according to any one of claims 24 to 33, wherein the first information is configured to indicate information about uplink resources included in the radio resources.

35. The method according to claim 34, wherein the radio resources include K uplink resources, where K is a positive integer greater than or equal to 1, and the first information is further configured to indicate one or more of the following:
cells corresponding to each of the K uplink resources;
resource quantity corresponding to each of the K uplink resources;
time-frequency location information corresponding to the K uplink resources.

36. The method according to any one of claims 24 to 35, wherein the service data is associated with a first window, the first window is configured to indicate a time upon the service data arriving at an access stratum of the terminal device, and a transmission moment of the first information satisfies one of the following:
before a starting moment of the first window;
within the first window;
after the first window.

37. The method according to any one of claims 24 to 36, wherein the radio resources include one or more of the following:
dynamically scheduled resources;
semi-statically configured resources;
pre-allocated resources.

38. The method according to any one of claims 24 to 37, wherein the first information is further configured to indicate one or more of the following:
a correspondence between the radio resources and cells;
a correspondence between the radio resources and base stations.

39. The method according to any one of claims 24 to 38, wherein the resource information includes a resource quantity of the radio resources, and the first information further includes: second information, the second information is configured to indicate an allocation probability of at least a part of the resource quantity.

40. The method according to any one of claims 24 to 39, wherein:
a first resource quantity equals the resource quantity of the radio resources; or,
a first resource quantity is determined based on allocation probabilities corresponding to each of multiple resource quantities in the radio resources, wherein the first resource quantity is determined based on the resource information of the radio resources indicated by the first information.

41. The method according to any one of claims 24 to 40, wherein:
a time for assigning Packet Data Convergence Protocol Sequence Numbers (PDCP SNs) to the service data is earlier than a time for a Logical Channel Prioritization (LCP) process; or,
the time for assigning the PDCP SNs to the service data is later than the time for the LCP process.

42. The method according to any one of claims 24 to 41, wherein:
the PDCP SNs of the service data are determined based on an order in which the service data arrives at an access stratum of the terminal device; or,
the PDCP SNs of the service data are determined based on the PSI of the service data.

43. The method according to any one of claims 24 to 42, wherein an order of the service data in a Transport Block (TB) is determined based on an order of the PDCP SNs of the service data.

44. A terminal device, comprising:
a receiving module, configured to receive first information transmitted by a network device, wherein the first information is configured to indicate resource information of radio resources allocated by the network device to the terminal device, and the radio resources correspond to a first time period;
an organization module, configured to organize transmission of service data based on the first information.

45. A network device, comprising:
a transmitting module, configured to transmit first information to a terminal device, wherein the first information is configured to indicate resource information of radio resources allocated by the network device to the terminal device, the radio resources correspond to a first time period, and and the radio resources are configured to organize service data.

46. A terminal device, comprising a transceiver, a memory, and a processor, wherein
the memory is configured to store a program, the processor is configured to invoke the program in the memory and control the transceiver to receive or transmit signals, to enable the terminal device to perform the method according to any one of claims 1 to 23.

47. A network device, comprising a transceiver, a memory, and a processor, wherein
the memory is configured to store a program, the processor is configured to invoke the program in the memory and control the transceiver to receive or transmit signals, to enable the network device to perform the method according to any one of claims 24 to 43.

48. A device, comprising a processor, configured to invoke a program from a memory, to enable the device to perform the method according to any one of claims 1 to 23 or 24 to 43.

49. A chip, comprising a processor, configured to invoke a program from a memory, to enable a device equipped with the chip to perform the method according to any one of claims 1 to 23 or 24 to 43.

50. A computer-readable storage medium, storing a program thereon that enables a computer to perform the method according to any one of claims 1 to 23 or 24 to 43.

51. A computer program product, comprising a program that enables a computer to perform the method according to any one of claims 1 to 23 or 24 to 43.

52. A computer program, wherein the computer program enables a computer to perform the method according to any one of claims 1 to 23 or 24 to 43.
